# EUROPEAN PATENT SPECIFICATION

(11) **EP 2 589 425 B1**
(45) Date of publication and mention of the grant of the patent: **22.07.2015**
(21) Application number: 12190519.4
(22) Date of filing: 30.10.2012
(51) Int. Cl.: B01D 53/26, C01B 3/52, C25B 1/04, C25B 15/00

(54) **Stripping and purifying tower for an electrolytic generator and method thereof**
Strippungs- und Reinigungskolonne für einen Elektrolyseur und Verfahren dafür
Colonne de strippage et purification pour un générateur électrolytique et procédé associé

(30) Priority: 04.11.2011 IT TO20111014
(43) Date of publication of application: 08.05.2013
(73) Proprietor: Idroenergy SPA, 57121 Livorno (IT)
(72) Inventor: Brunori, Marcello, 20090 Buccinasco (MI) (IT)
(74) Representative: Baroni, Matteo

(56) References cited:
- DE-A1- 4 201 033
- GB-A- 364 462
- JP-A- 11 090 151
- JP-B- 7 059 756
- US-A- 2 739 936
- US-A- 5 484 512
- US-A1- 2009 263 693
- US-A1- 2010 038 257
- DATABASE WPI Week 201020 Thomson Scientific, London, GB; AN 2010-C62166 XP002678380, & CN 101 654 786 A (SHANGHAI COCH ENERGY CO LTD) 24 February 2010 (2010-02-24)
- DATABASE WPI Week 201119 Thomson Scientific, London, GB; AN 2011-B24932 XP002678356, & CN 101 928 953 A (SHANGHAI COCH ENERGY CO LTD) 29 December 2010 (2010-12-29)

## Description

### [TECHNICAL FIELD]

The present invention relates to a purifier that separates gases produced by an electrolytic generator from electrolyte contaminants. The present invention further relates to an electrolytic gas generator and to a gas purification method.

In general, the present invention is applicable to the field of electrolytic generation of gases such as oxygen and/or hydrogen through dissociation in an electrolytic cell.

### [PRIOR ART]

Systems which exploit electrolytic dissociation mechanisms for generating oxygen and/or hydrogen gas in molecular form (i.e. H₂ and O₂) are currently known.

These known systems, also referred to as "electrolytic generators" or "electrolytic dissociators", utilize a cell containing an electrolyte (such as, for example, KOH or NaOH) in aqueous solution (H₂O). The supply of electric energy to the cell causes the water molecule to dissociate into its respective ions, resulting in the generation of H₂ and O₂ in gaseous form, in a molar ratio of 2:1.

Electrolytic generators are mainly used for producing technical oxygen and hydrogen gas through water dissociation. The application of such gases produced by means of electrolytic generators/dissociators include, among other things: thermal treatments, oxy-cutting, braze welding, glass and crystal processing, sintering and thermal treatment furnaces, cooling of medium-power alternators.

Large electrolytic generators can produce 30 to 120 m³/h of gas at a pressure of 3 to 8 bar, and can be operated in a 24h continuous cycle.

Known electrolytic generators are however affected by the problem of electrolyte drag (e.g. H₂0 + KOH or H₂0 + NaOH) in the outlet line for the H₂ and/or O₂ gas produced. The electrolyte dragged in the produced gas causes contamination of the latter, which will not reach an acceptable degree of purity; therefore, the produced gas needs be subjected to subsequent purification before being stored or used.

Because of this, the electrolytic generators known in the art include a system for removing the electrolyte for the output gas. These purification systems use complex circuits, which are typically external to the electrolytic generation unit and comprise a large number of components.

The purification systems currently used in electrolytic generators represent a significant complication for the plant and for the operation thereof. In fact, electrolytic generators equipped with known purification systems require frequent interventions by trained personnel, since the circuits deal with corrosive fluids and active gases.

In addition, electrolytic generators equipped with known purification systems require considerable capital costs, since they require a large number of components, such as scrubbers, exchangers, pumps, pipes, intermediate storage systems and gas holders. Document DE4201033A1 relates to a separator for separating a KOH suspension in a flow of H₂ or O₂ gas, comprising a bubble column in a liquid container, and a perforated plate above it. However, also the separator described in DE4201033A1 suffers from some drawbacks and inefficiencies in regard to gas purification within the frame of the present invention.

### [BRIEF DESCRIPTION OF THE INVENTION]

The object of the present invention is to provide a gas purifier and an associated purification method which allow overcoming the above-mentioned drawbacks of the prior art, as well as other problems.

In particular, it is one object of the present invention to provide a purifier which allows purifying the gas produced by an electrolytic generator from dragged electrolyte in an effective and simple manner, thereby obtaining a gas having a higher degree of purity.

It is another object of the present invention to provide a purifier having compact dimensions, so as to obtain an electrolytic generator with a simple and economical system structure.

It is a further object of the present invention to provide a purifier for electrolytic generators which is reliable and comprises a reduced number of components.

These and other objects of the present invention are achieved through a purifier, a purification method and an electrolytic generator incorporating the features set out in the appended claims, which are intended to be an integral part of the present description.

A general idea at the basis of the present invention is to provide a gas purifier for an electrolytic generator, comprising a collection tank and a purification inlet for supplying a two-phase fluid comprising said gas to be purified into the collection tank, and further comprising a plurality of washing dishes and a sprinkler adapted to distribute washing liquid onto the plurality of washing dishes, and further comprising a recondenser that comprises at least one heat exchanger in which a refrigerating fluid circulates, and further comprising a purification outlet adapted to convey a flow of said gas to be purified through the plurality of washing dishes and the recondenser.

It is thus possible to purify the gas produced by an electrolytic generator from dragged electrolyte in an effective and simple manner, thereby obtaining gas having a higher degree of purity. Advantageously, the purifier comprises a reduced number of components, thus making the system of the electrolytic generator simpler. In addition, a purifier for an electrolytic generator according to the present invention offers the advantage of having a simple structure, which translates into high reliability in operation.

In a preferred embodiment, the purifier further comprises a recondenser, which comprises at least one heat exchanger in which a refrigerating fluid circulates. This advantageously allows to obtain gas which has been purified from any traces of electrolyte while also having a low residual moisture content, to advantage of the final quality of the product.

The purifier comprises a hermetically sealable structure including said collection tank, said washing dishes and said recondenser. Advantageously, this makes it possible to obtain a compact purifier. Likewise, also the electrolytic generator with which the purifier is associated turns out to be more compact and can conveniently be enclosed within a confined space. This also allows protecting the various system components, to advantage of operational safety.

The purifier further comprises a recovery outlet in fluidic connection with said collection tank, for retrieving said washing water and any electrolyte previously dragged by said oxygen or hydrogen gas. Advantageously, this makes it possible to appropriately dispose of the electrolyte that has been separated from the produced gas, since the electrolyte may also comprise reactive chemicals.

Furthermore, the electrolytic generator comprises a recovery pump in fluidic connection with said recovery outlet, wherein said recovery pump is also in fluidic connection with an inlet of said electrolytic cell in order to reintroduce said washing water and any dragged electrolyte into said electrolytic cell. This solution advantageously implements a continuous generation process, wherein the dragged electrolyte is recovered as an active element and reused in the process, thereby making the implementation thereof less expensive. In addition, the electrolytic generator will produce no waste products, since the electrolyte is recovered together with a fraction of the washing water that will be used in the electrolytic cell, thereby contributing even more to the economy of the production process. This also avoids the need for frequent service to refill or anyway handle the electrolyte.

The electrolytic generator further comprises a ventilation system in fluidic connection with said purification outlet, adapted to collect said purified oxygen or hydrogen gas for subsequent use or storage thereof. A product having a high final quality is thus advantageously obtained from the electrolytic generator.

In a particularly advantageous embodiment, the electrolytic generator comprises a first oxygen outlet of said electrolytic cell, and a second hydrogen outlet of said electrolytic cell, wherein said electrolytic generator comprises a first one of said purifier in fluidic connection with said first oxygen outlet, and a second one of said purifier in fluidic connection with said second hydrogen outlet, thus providing two separate circuits for purifying said oxygen and for purifying said hydrogen.

This embodiment is particularly advantageous for generators of hydrogen and oxygen in a molar fraction of 2:1, because it allows to separately purify each one of said gases, thereby obtaining high-quality products, while at the same time exploiting the simpler installation in the electrolytic generator to achieve lower costs and increased reliability.

The present invention also relates to an electrolytic generator comprising a purifier as described above.

The present invention further relates to a gas purification method, in particular implemented in a purifier as described above.

Further objects and advantages of the present invention will become more apparent from the following detailed description and from the annexed drawings, which are supplied by way of non-limiting example.

### [BRIEF DESCRIPTION OF THE DRAWINGS]

In the drawings referred to in the description, the same reference numerals designate the same or equivalent elements or actions.
- Figure 1 schematically shows a first example of embodiment of an electrolytic generator comprising a purifier according to the present invention;
- Figure 2 schematically shows a second example of embodiment of an electrolytic generator comprising a purifier according to the present invention;
- Figure 3 schematically shows an example of embodiment of a purifier according to the present invention.

### [DETAILED DESCRIPTION]

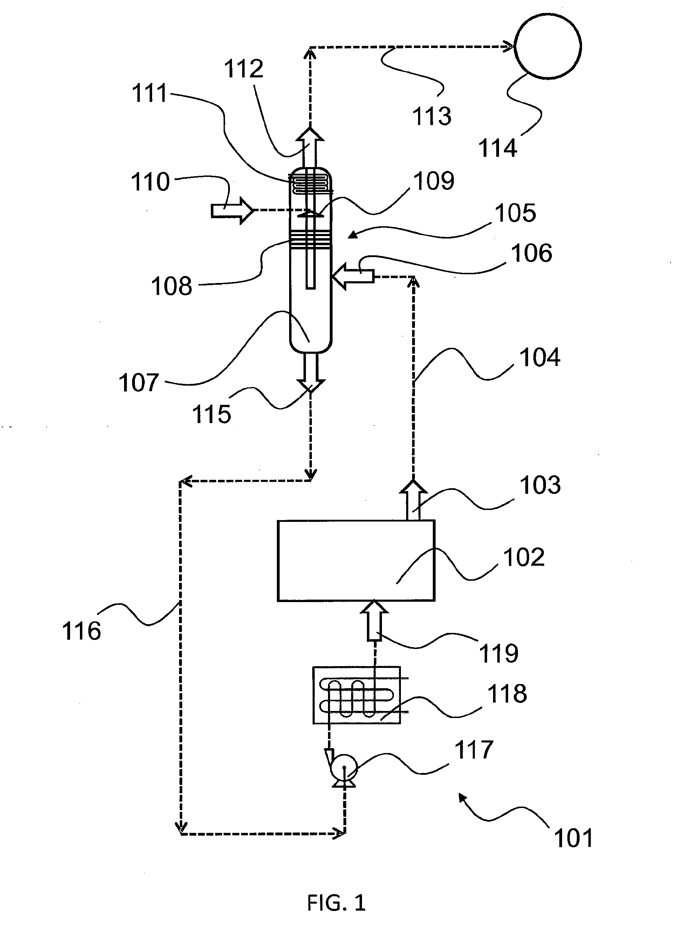

Figure 1 shows a first embodiment of an electrolytic generator 101 comprising a purifier according to the present invention. In the present description, the term "electrolytic generator" refers to a system, or an apparatus, adapted to generate at least one hydrogen and/or oxygen gas through electrolytic dissociation. The electrolytic generators taken into consideration herein will therefore be described only in their essential components, in particular by only providing detailed information about the most distinctive components and teachings of the present invention. It should also be taken into account that the electrolytic generators described herein may also comprise further components and/or systems known in the field of technical gas production/generation plants, which for simplicity will not be referred to nor described herein.

The electrolytic generator 101 comprises at least one electrolytic cell 102 for electrolytic dissociation of water (H₂O) caused by application of electric current in the presence of specific electrolytes in solution (e.g. NaOH or KOH). The electrolytic cell 102 can thus produce hydrogen (H₂) and oxygen (O₂), typically in a 2:1 molar fraction. For the purposes of the present invention, the electrolytic cell comprises at least one outlet 103, through which a gas just produced, whether oxygen or hydrogen, can exit; said gases are, in fact, separated according to known methods, so that at the outlet 103 there is essentially only one of such gases (save for any contamination). However, as previously explained, at the outlet 103 the produced gas typically drags along a fraction of electrolyte and moisture/water.

From the outlet 103, through a pipe 104, the produced gas and any dragged elements are brought to the purifier 105. The purifier 105, which will be described herein in a preferred embodiment thereof, may also be referred to as "purifying tower" or "stripping tower" due to its preponderant shape and functions.

The purifier 105 comprises an inlet 106, which receives the gas including any dragged electrolyte and liquid/vapour. Therefore, the purifier 105 is fed with a two-phase fluid. Typically, the two-phase fluid arrives at the inlet 106 at a temperature of 70÷80°C and a pressure of 4÷5 bar.

The inlet 106 opens into a volume confined by the walls of the purifier 105, i.e. a "collection tank" 107. The two-phase fluid expands in the collection tank 107, thus already separating at least partially from dragged electrolyte and water. The way in which the incoming two-phase fluid expands is called "*flash*" because of its speed, and involves a separation between the gaseous phase and the liquid phase.

After expansion, the lighter gas tends to go up towards the top of the purifier 105, thereby separating from the electrolyte and water collecting in the collection tank 107. This effect of spontaneous physical separation is especially evident when the gas involved is hydrogen, which has a very low molecular weight. However, the ascending gas continues to drag along a part of the electrolyte and a significant moisture content. Preferably, in the collection tank 107 there is a quantity of liquid, the surface of which is at the interface with the aeriform phase. The surface of the liquid collected in the collection tank 107 is lower than the inlet 106. Therefore, the two-phase fluid enters the tank above the maximum level of the liquid in the collection tank; this improves the separation of the two-phase fluid.

The purifier 105 further comprises a plurality of washing elements, such as the washing dishes 108, i.e. suitably shaped or perforated flat surfaces essentially parallel to one another, through which the ascending gas can flow. In general, the washing elements are structural elements adapted to increase the interaction between the ascending gas and the washing liquid (water). The dishes 108 comprise a column of dishes, preferably in a number of 6 to 9, laid horizontally and parallel to one another. Each dish 108 comprises a plurality of holes or apertures adapted to allow the passage of gas going up and liquid going down onto the dishes column.

Above the washing dishes 108, i.e. above the dish at the top of the dishes column 108, the purifier 105 further comprises washing liquid distribution means 109, e.g. a plurality of sprinkling nozzles. The distribution means 109 distribute a washing liquid, essentially distilled or demineralized water, into a purifier chamber essentially located above the washing dishes 108; washing water is supplied through an inlet 110 by a suitable circuit, and is preferably at ambient temperature, i.e. 20÷25°C. By dripping down onto the washing dishes 108 and encountering the ascending gas flow, the washing water has a further purification effect on the gas, which is cooled and separates from the dragged electrolyte. This improves the efficiency of the separation caused by the interaction with the washing liquid.

In particular, the uppermost dish of the dishes column 108 has such a shape as to allow the washing liquid to accumulate on its surface, which will therefore get "filled" with washing liquid.

The washing water thus distributed, once it has gone past the washing dishes 108, is collected in the collection tank 107 together with the recovered electrolyte.

Therefore, in the collection tank 107 there is accumulation of water and electrolyte, in proportions that cause the formation of a level of liquid in the collection tank 107. To this end, the collection tank 107 is suitably sealed and is made of a material resistant to chemical/physical agents, e.g. stainless steel.

In general, the entire purifier 105 is so designed as to be able to sealingly contain liquids and gases, through the use of materials capable of withstanding the required operating conditions in accordance with the dictates of good design practice.

The gas ascending within the purifier 105, after having gone past the washing dishes 108 and the washing liquid distributor 109, has been essentially purified from dragged electrolyte and is at a temperature of 25÷30°C and a pressure of 4÷6 bar. However, the gas is still saturated with moisture, which it still drags along.

The purifier 105 further comprises a recondenser 111, which comprises at least one heat exchanger, in which a refrigerating liquid circulates. In the preferred embodiment, the recondenser 111 comprises a refrigerating coil, preferably operating at a temperature of 0°C. The moisture-saturated gas, by exchanging heat with the recondenser 111, is cooled to 1÷2°C, thereby losing almost all of its moisture content. The water, i.e. condensed moisture, drips down from the recondenser 111 onto the washing dishes 108, thus contributing to washing the ascending gas and then, in its turn, collecting in the collection tank 107.

Past the recondenser 111, the gas is essentially dry, at a temperature of 1÷2°C and a pressure of 4÷6 bar; in addition, the gas has been effectively purified from electrolyte, the quantity of which has been reduced to the order of parts per million (ppm).

At the outlet 112, purified gas is obtained at a temperature of 2÷3°C and a pressure of 4÷5 bar, also because of the effect of suitable ventilation means (not shown) which, by means of valves, pumps and channels, ensure an effective outflow of purified gas through the outlet 112.

The purified gas then flows in the pipes 113 up to the storage tank 114 or to a user device for immediate use.

Following the purification process described above, which in particular takes place in the purifier 105, water and electrolyte accumulate in the collection tank 107.

Because of this, the purifier 105 comprises a recovery outlet 115, which collects the electrolytic solution accumulated in the collection tank 107 and delivers it into the recovery circuit 116. The recovery circuit 116 comprises at least one pump 117, which provides the prevalence required for transporting the electrolytic solution in the circuit 116. The electrolytic solution (water and electrolyte) thus recovered is preferably cooled to ambient temperature by the heat exchanger 118, and is then conveyed to the inlet 119 of the electrolytic cell 102.

In this manner, recovered electrolyte and washing water can be reused for the electrolytic dissociation process, i.e. for the next cycle of hydrogen and/or oxygen generation.

It is apparent that the generic "gas" referred to in the description of Figure 1 may be either hydrogen or oxygen.

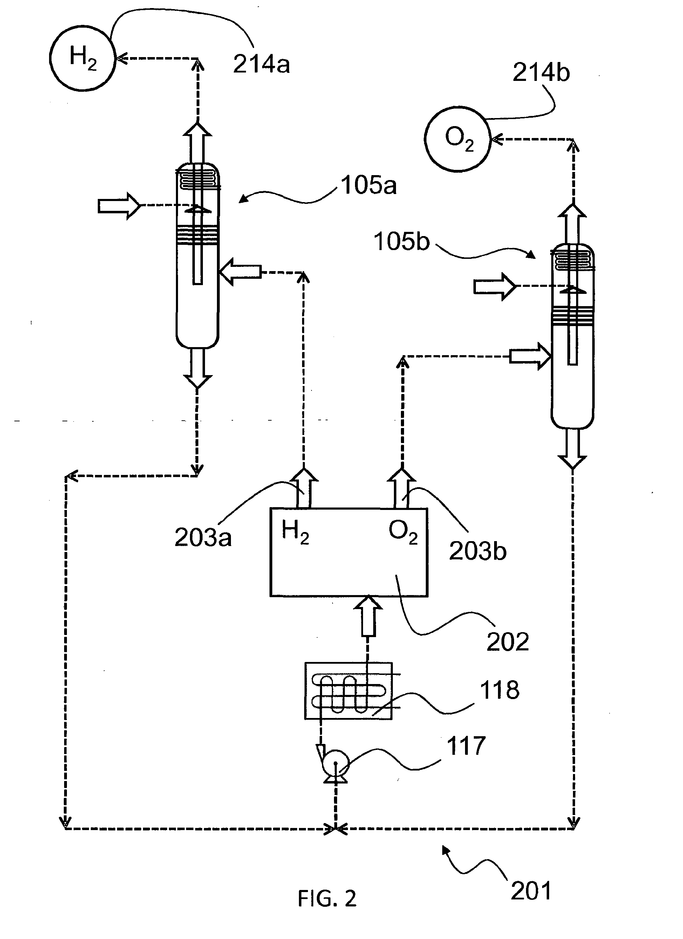

Figure 2 shows a second embodiment of an electrolytic generator 201 according to the present invention.

The electrolytic generator 201 comprises at least one electrolytic cell 202 for electrolytic dissociation of water (H₂O) caused by application of electric current in the presence of specific electrolytes in solution (e.g. NaOH or KOH). The electrolytic cell 202 can therefore produce hydrogen (H₂) and oxygen (O₂), typically in a 2:1 molar fraction. To this end, the electrolytic cell 202 comprises two outlets 203a and 203b, through which the produced gases can exit separately, i.e. hydrogen (e.g. through 203a) and oxygen (e.g. through 203b), respectively.

System circuits essentially similar to the one previously described for a single gas with reference to Figure 1 are associated with each one of the two gas outlets 203a and 203b. In particular, the hydrogen purification line (e.g. the left portion of Figure 2) comprises a hydrogen purifier 105a, which is essentially similar to the purifier 105 described with reference to Figure 1. Likewise, the oxygen purification line (e.g. the right portion of Figure 2) comprises an oxygen purifier 105b, which is essentially similar to the purifier 105 described with reference to Figure 1.

Although the principle of operation of the purifiers 105a and 105b is essentially similar (so much so that at least one of them may exactly correspond to the purifier 105), they may be distinguished by different construction details.

In particular, some differences may be appropriately conceived between the purifiers 105a and 105b, in accordance with the dictates of good design practice, in the light of the different gases to be treated (hydrogen and oxygen, respectively), of the production pressure of each gas (which may be different), and of the volumetric flow rate produced by the electrolytic generator 202 (it should be reminded that hydrogen and oxygen are typically produced in 2:1 molar fractions). For example, it is conceivable to provide different accumulation volumes for the purifiers 105a and 150b, as well as different dimensions for the components included therein.

In the system circuit of the generator 201, preferably both electrolytic solution recovery circuits respectively exiting from the purifiers 105a and 105b converge in the pump 117. In fact, both hydrogen and oxygen gases drag the same process electrolyte out of the electrolytic cell 202, which will thus be reintroduced.

Anyway, the electrolytic generator 201 ensures effective purification of both gases; therefore, for example, purified hydrogen will be directed to the storage tank 214a, whereas purified oxygen will be directed to the storage tank 214b.

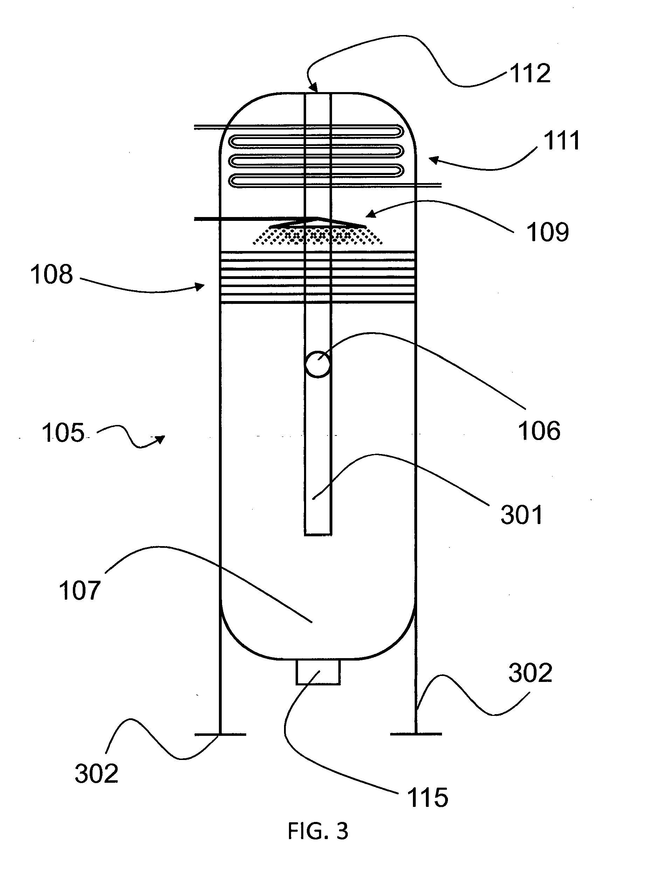

Figure 3 shows more in detail a preferred embodiment of the purifier 105. In this embodiment, the inlet 106 is preferably located at half the height of the column/tower of the purifier 105, so that the collection tank 107 occupies a portion preferably equal to at least half the total volume of the purifier 105.

The collection tank 107 comprises an outlet 115 located at the bottom of the collection tank 107.

The washing dishes 108 comprise a predefined number of washing dishes, which essentially depends on design choices related to the shape of each dish and to washing efficiency; preferably, said dishes are in a number of seven.

The washing liquid distribution means 109 comprise at least one sprinkling nozzle or sprinkler, but they may comprise a larger number of sprinklers arranged otherwise.

The recondenser 111 comprises a refrigerating liquid circuit, e.g. using R134A coolant, which is so designed as to maximize the thermal exchange with the ascending gas, in accordance with the teachings of good engineering practice.

Finally, the outlet 112 is preferably located at the top of the purifier 105, with associated ventilation means (not shown) of a known type.

The purifier 115 preferably includes a central element 301 having a hollow cylindrical shape, which is adapted to improve the gas flow towards the high regions of the purifier 115. Preferably, the lower portion of the element 301 is such as to remain under the surface of the electrolytic solution collected in the collection tank 107 in operation.

Finally, the purifier 105 comprises a plurality of support elements 302, adapted to position it in the desired position inside the electrolytic generator; for example, the support elements 302 may comprise support legs as shown in Figure 3.

According to the teachings of the present invention, it is also provided a method for purifying oxygen and/or hydrogen gas produced in an electrolytic dissociation cell of an electrolytic generator. According to this method, the gas to be purified is accumulated into a collection tank and said gas is washed by means of a plurality of washing dishes onto which washing water is sprinkled, wherein the flow of said gas to be purified is conveyed through said plurality of washing dishes.

The method also provides for cooling the gas thus washed, in order to condense the moisture content thereof, by means of a recondenser comprising at least one heat exchanger in which a refrigerating fluid circulates.

In addition, according to this method, the washing water and any electrolyte separated from the gas are retrieved and reintroduced into the electrolytic cell for further reuse.

Preferably, the method according to the present invention is implemented in a purifier like the purifier 105 of Figure 1, and is therefore provided in an electrolytic generator like the electrolytic generator 101 of Figure 1.

An electrolytic generator according to the present invention can thus reduce by up to 600÷800 times the electrolyte content dragged by the gas being produced, thereby allowing to produce gas such as hydrogen and oxygen having a high degree of purity (i.e. with a negligible impurity content for most applications). An electrolytic generator according to the present invention is also simple and reliable, in that it can carry out a purification process that requires very few interventions by operators and maintenance personnel.

For example, an alternative embodiment may be conceived in which the recondenser 111 is separate from the purifier 105, e.g. by providing an accumulation volume for moisture-saturated gas downstream of the purifier 105.

It is also clear that the physical quantities and the temperature and pressure values specified in the present description, even though they may be preferred and advantageous ones, are to be intended merely as explanatory and non-limiting examples.

Finally, it will be apparent to those skilled in the art that any references contained herein to pure gases should not be understood as limiting, since they should be intended to comprise real gas and gas mixtures, possibly contaminated by other elements, e.g. H₂ in a gas consisting mainly of O₂ or vice versa.

## Claims

1. A gas purifier (105, 105a, 105b) for an electrolytic generator (101, 201), comprising a collection tank (107) and a purification inlet (106) for supplying a two-phase fluid comprising said gas to be purified into said collection tank (107), **characterized in that** it further comprises a plurality of washing dishes (108) and a sprinkler (109) adapted to distribute washing liquid onto said plurality of washing dishes (108), and that it further comprises a recondenser (111) comprising at least one heat exchanger in which a refrigerating fluid circulates, and **in that** it further comprises a purification outlet (112) adapted to convey a flow of said gas to be purified through said plurality of washing dishes (108) and said at least one recondenser (111).

2. A gas purifier (105, 105a, 105b) according to claim 1, wherein said plurality of washing dishes (108) comprise a plurality of dishes substantially parallel to one another, each comprising a plurality of holes or apertures, adapted to allow said gas to be purified to flow upwards, and said washing liquid to flow downwards onto said plurality of washing dishes (108).

3. A gas purifier (105, 105a, 105b) according to claim 2, wherein at least one dish at the top of said plurality of washing dishes (108) is shaped as to allow for accumulation of said washing liquid.

4. A gas purifier (105, 105a, 105b) according to any one of claims 1 to 3, wherein said collection tank (107) is adapted to collect a volume of liquid having a predetermined maximum level, and wherein said purification inlet (106) is located above said predetermined maximum level.

5. A gas purifier (105, 105a, 105b) according to claim 4, wherein said purification inlet (106) faces a volume of said collection tank (107) which is configured to allow said incoming two-phase fluid to expand.

6. A gas purifier (105, 105a, 105b) according to any one of claims 1 to 5, further comprising a hermetically sealable structure having a substantially cylindrical shape, which includes said collection tank (107), said washing dishes (108) and said recondenser (111).

7. A gas purifier (105, 105a, 105b) according to any one of claims 1 to 6, further comprising a recovery outlet (115) in fluidic connection with said collection tank (107) for retrieving said washing liquid and any electrolyte previously dragged along by said gas to be purified, wherein said recovery outlet (115) is positioned at the bottom of said collection tank (107).

8. An electrolytic generator of oxygen and/or hydrogen gas, comprising at least one electrolytic dissociation cell (102, 202), at least one outlet (103, 203a, 203b) of said electrolytic cell for at least one of said oxygen or hydrogen gas, and further comprising at least one purifier (105, 105a, 105b) in fluidic connection (104) with said at least one outlet (103, 203a, 203b) of said electrolytic cell (102, 202), **characterized in that** said purifier (105, 105a, 105b) is a purifier according to any one of claims 1 to 7.

9. An electrolytic generator according to claim 8, further comprising a recovery pump (117) in fluidic connection (116) with said recovery outlet (115), wherein said recovery pump (117) is further in fluidic connection with an inlet (119) of said electrolytic cell (102) in order to reintroduce said washing liquid and said any dragged electrolyte into said electrolytic cell (102).

10. An electrolytic generator according to any one of claims 8 or 9, further comprising at least one ventilation system in fluidic connection (113) with said purification outlet (112) and adapted to collect (114, 214a, 214b) said oxygen or hydrogen gas once it has been purified.

11. An electrolytic generator according to any one of claims 8 to 10, wherein said electrolytic cell (202) comprises a first oxygen outlet (203b) and a second hydrogen outlet (203a), and wherein said electrolytic generator comprises a first one of said purifier (105b) in fluidic connection with said first oxygen outlet (203b) and a second one of said purifier (105a) in fluidic connection with said second hydrogen outlet (203a), thus providing two circuits for separately purifying said oxygen and said hydrogen, wherein said separate purification circuits rejoin prior to re-entering said electrolytic cell (202).

12. A method for purifying oxygen or hydrogen gas produced in an electrolytic dissociation cell (201, 202) of an electrolytic generator (101, 102), comprising the steps of: expanding a two-phase fluid comprising a gas to be purified in a collection tank (107) in order to separate said gas to be purified; washing said gas in a plurality of washing dishes (108) onto which a washing liquid is sprinkled, thus conveying the flow of said gas to be purified through said plurality of washing dishes (108); cooling said gas in order to condense the moisture content thereof by means of a recondenser (111) comprising at least one heat exchanger in which a refrigerating fluid circulates.

13. A gas purification method according to claim 12, further comprising the step of retrieving said washing liquid and any electrolyte previously dragged along by said oxygen or hydrogen gas, and of reintroducing them (116, 117, 118) into said electrolytic cell (102, 202).

14. A gas purification method according to any one of claims 12 or 13, wherein said electrolytic generator (101, 102) is an electrolytic generator according to any one of claims 8 to 11.

## Patentansprüche

1. Gasreiniger (105, 105a, 105b) für einen Elektrolyseur (101, 201), umfassend einen Sammeltank (107) und einen Reinigungseinlass (106) zum Zuführen eines zwei-phasigen Fluids umfassend das zu reinigende Gas in den Sammeltank (107), **dadurch gekennzeichnet, dass** er des Weiteren eine Mehrzahl von Waschschüsseln (108) und einen Sprinkler (109), der angepasst ist, eine Waschflüssigkeit auf der Mehrzahl von Waschschüsseln (108) zu verteilen, umfasst, und dass er des Weiteren einen Rückkondensierer (111) umfasst, der zumindest einen Wärmetauscher umfasst, in dem ein Kühlfluid zirkuliert, und dass er des Weiteren einen Reinigungsauslass (112) umfasst, der angepasst ist, einen Fluss des zu reinigenden Gases durch die Mehrzahl von Waschschüsseln (108) und den zumindest einen Rückkondensierer (111) zu leiten.

2. Gasreiniger (105, 105a, 105b) nach Anspruch 1, wobei die Mehrzahl von Waschschüsseln (108) eine Mehrzahl von Schüsseln umfasst, die im Wesentlichen parallel zueinander sind, wobei jede eine Mehrzahl von Löchern oder Aperturen umfasst, die angepasst sind, dem zu reinigenden Gas zu erlauben, aufwärts zu fließen, und der Waschflüssigkeit abwärts auf die Mehrzahl von Waschschüsseln (108) zu fließen.

3. Gasreiniger (105, 105a, 105b) nach Anspruch 2, wobei zumindest eine Schüssel an der Spitze der Mehrzahl von Waschschüsseln (108) so geformt ist, dass sie eine Akkumulation der Waschflüssigkeit erlaubt.

4. Gasreiniger (105, 105a, 105b) nach einem der Ansprüche 1 bis 3, wobei der Sammeltank (107) angepasst ist, ein Flüssigkeitsvolumen, das einen vorbestimmten maximalen Pegel aufweist, zu sammeln, und wobei der Reinigungseinlass (106) oberhalb des vorbestimmten maximalen Pegels angeordnet ist.

5. Gasreiniger (105, 105a, 105b) nach Anspruch 4, wobei der Reinigungseinlass (106) einem Volumen des Sammeltanks (107) gegenüberliegt, das angepasst ist, dem hereinströmenden zwei-phasigen Fluid zu erlauben, zu expandieren.

6. Gasreiniger (105, 105a, 105b) nach einem der Ansprüche 1 bis 5, des Weiteren umfassend eine hermetisch verschließbare Struktur, die eine im Wesentlichen zylindrische Form aufweist, die den Sammeltank (107), die Waschschüsseln (108) und den Rückkondensierer (111) beinhaltet.

7. Gasreiniger (105, 105a, 105b) nach einem der Ansprüche 1 bis 6, des Weiteren umfassend einen Rückgewinnungsauslass (115) in fluidischer Verbindung mit dem Sammeltank (107) zum Wiedergewinnen der Waschflüssigkeit und eines etwaigen Elektrolyts, das zuvor durch das zu reinigende Gas mitgeschleppt wurde, wobei der Rückgewinnungsauslass (115) an dem Boden des Sammeltanks (107) positioniert ist.

8. Elektrolyseur von Sauerstoff- und/oder Wasserstoffgas, umfassend zumindest eine elektrolytische Abspaltungszelle (102, 202), zumindest einen Auslass (103, 203a, 203b) der elektrolytischen Zelle für zumindest eines des Sauerstoffoder Wasserstoffgases, und des Weiteren umfassend zumindest einen Reiniger (105, 105a, 105b) in fluidischer Verbindung (104) mit dem zumindest einen Auslass (103, 203a, 203b) der elektrolytischen Zelle (102, 202), **dadurch gekennzeichnet, dass** der Reiniger (105, 105a, 105b) ein Reiniger gemäß einem der Ansprüche 1 bis 7 ist.

9. Elektrolyseur nach Anspruch 8, des Weiteren umfassend eine Rückgewinnungspumpe (117) in fluidischer Verbindung (116) mit dem Rückgewinnungsauslass (115), wobei die Rückgewinnungspumpe (117) des Weiteren in fluidischer Verbindung mit einem Einlass (119) der elektrolytischen Zelle (102) steht, um die Waschflüssigkeit und das etwaige mitgeschleppte Elektrolyt wieder in die elektrolytische Zelle (102) einzuführen.

10. Elektrolyseur nach einem der Ansprüche 8 oder 9, des Weiteren umfassend zumindest ein Ventilationssystem in fluidischer Verbindung (113) mit dem Reinigungsauslass (112) und angepasst, das Sauerstoff- oder Wasserstoffgas zu sammeln (114, 114a, 214b), nachdem es gereinigt wurde.

11. Elektrolyseur nach einem der Ansprüche 8 bis 10, wobei die elektrolytische Zelle (202) einen ersten Sauerstoffauslass (203b) und einen zweiten Wasserstoffauslass (203a) umfasst, und wobei der Elektrolyseur einen ersten von dem Reiniger (105b) in fluidischer Verbindung mit dem ersten Sauerstoffauslass (203b) und einem zweiten von dem Reiniger (105a) in fluidischer Verbindung mit dem zweiten Wasserstoffauslass (203a) umfasst, so dass zwei Kreise zum separaten Reinigen des Sauerstoffs und des Wasserstoffs bereitgestellt sind, wobei die zwei separaten Reinigungskreise sich vor dem Wiedereintritt in die elektrolytische Zelle (202) wieder vereinigen.

12. Verfahren zum Reinigen von Sauerstoff- oder Wasserstoffgas, das in einer elektrolytischen Abspaltungszelle (201, 202) eines Elektrolyseurs (101, 102) erzeugt wird, umfassend die Schritte: Expandieren eines zwei-phasigen Fluids, das ein zu reinigendes Gas umfasst, in einen Sammeltank (107), um das zu reinigende Gas abzutrennen; Waschen des Gases in einer Mehrzahl von Waschschüsseln (108), auf die eine Waschflüssigkeit gesprenkelt wird, so dass der Fluss des zu reinigenden Gases durch die Mehrzahl von Waschschüsseln (108) geführt wird; Kühlen des Gases, um den Feuchtigkeitsinhalt desselben zu kondensieren, mittels eines Rückkondensierers (111), der zumindest einen Wärmetauscher umfasst, in dem ein Kühlfluid zirkuliert.

13. Gasreinigungsverfahren nach Anspruch 12, des Weiteren umfassend den Schritt des Wiedergewinnens der Waschflüssigkeit und eines etwaigen Elektrolyts, das zuvor durch das Sauerstoff- oder Wasserstoffgas mitgeschleppt wurde, und des Wiedereinführens dieser (116, 117, 118) in die elektrolytische Zelle (102, 201).

14. Gasreinigungsverfahren nach einem der Ansprüche 12 oder 13, wobei der Elektrolyseur (101, 102) ein Elektrolyseur nach einem der Ansprüche 8 bis 11 ist.

## Revendications

1. Epurateur de gaz (105, 105a, 105b) pour un générateur électrolytique (101, 201), comprenant un réservoir de collecte (107) et une admission d'épuration (106) pour fournir un fluide diphasique comprenant ledit gaz à épurer dans ledit réservoir de collecte (107), **caractérisé en ce qu'**il comprend en outre une pluralité de cuves de lavage (108) et un arroseur (109) adapté pour distribuer un liquide de lavage sur ladite pluralité de cuves de lavage (108), et **en ce qu'**il comprend en outre un recondenseur (111) comprenant au moins un échangeur de chaleur dans lequel circule un fluide réfrigérant, et **en ce qu'**il comprend en outre un refoulement d'épuration (112) adapté pour acheminer un écoulement dudit gaz à épurer à travers ladite pluralité de cuves de lavage (108) et ledit au moins un recondenseur (111).

2. Epurateur de gaz (105, 105a, 105b) selon la revendication 1, dans lequel ladite pluralité de cuves de lavage (108) comprend une pluralité de cuves sensiblement parallèles les unes aux autres, chacune comprenant une pluralité d'orifices ou d'ouvertures adaptés pour permettre audit gaz à épurer de s'écouler vers le haut, et audit liquide de lavage de s'écouler vers le bas sur ladite pluralité de cuves de lavage (108).

3. Epurateur de gaz (105, 105a, 105b) selon la revendication 2, dans lequel au moins une cuve en haut de ladite pluralité de cuves de lavage (108) est conformée de façon à permettre l'accumulation dudit liquide de lavage.

4. Epurateur de gaz (105, 105a, 105b) selon l'une quelconque des revendications 1 à 3, dans lequel ledit réservoir de collecte (107) est adapté pour collecter un volume de liquide présentant un niveau maximal prédéterminé, et dans lequel ladite admission d'épuration (106) est située au-dessus dudit niveau maximal prédéterminé.

5. Epurateur de gaz (105, 105a, 105b) selon la revendication 4, dans lequel ladite admission d'épuration (106) fait face à un volume dudit réservoir de collecte (107) qui est configuré pour permettre audit fluide diphasique entrant de se détendre.

6. Epurateur de gaz (105, 105a, 105b) selon l'une quelconque des revendications 1 à 5, comprenant en outre une structure hermétiquement scellable de forme sensiblement cylindrique, qui comprend ledit réservoir de collecte (107), lesdites cuves de lavage (108) et ledit recondenseur (111).

7. Epurateur de gaz (105, 105a, 105b) selon l'une quelconque des revendications 1 à 6, comprenant en outre un refoulement de récupération (115) en raccordement fluidique avec ledit réservoir de collecte (107) pour récupérer ledit liquide de lavage et tout électrolyte auparavant entraîné par ledit gaz à épurer, dans lequel ledit refoulement de récupération (115) est positionné au fond dudit réservoir de collecte (107).

8. Générateur électrolytique d'oxygène et/ou d'oxygène gazeux, comprenant au moins une cellule de dissociation électrolytique (102, 202), au moins un refoulement (103, 203a, 203b) de ladite cellule électrolytique pour au moins l'un dudit oxygène ou dudit hydrogène gazeux, et comprenant en outre au moins un épurateur (105, 105a, 105b) en raccordement fluidique (104) avec ledit au moins un refoulement (103, 203a, 203b) de ladite cellule électrolytique (102, 202), **caractérisé en ce que** ledit épurateur (105, 105a, 105b) est un épurateur selon l'une quelconque des revendications 1 à 7.

9. Générateur électrolytique selon la revendication 8, comprenant en outre une pompe de récupération (117) en raccordement fluidique (116) avec ledit refoulement de récupération (115), dans lequel ladite pompe de récupération (117) est en outre en raccordement fluidique avec une admission (119) de ladite cellule électrolytique (102) afin de réintroduire ledit liquide de lavage et tout dit électrolyte entraîné dans ladite cellule électrolytique (102).

10. Générateur électrolytique selon l'une quelconque des revendications 8 ou 9, comprenant en outre au moins un système de ventilation en raccordement fluidique (113) avec ledit refoulement d'épuration (112) et adapté pour collecter (114, 214a, 214b) ledit oxygène ou ledit hydrogène gazeux une fois qu'il a été épuré.

11. Générateur électrolytique selon l'une quelconque des revendications 8 à 10, dans lequel ladite cellule électrolytique (202) comprend un premier refoulement d'oxygène (203b) et un second refoulement d'hydrogène (203a), et dans lequel ledit générateur électrolytique comprend un premier dudit épurateur (105b) en raccordement fluidique avec ledit premier refoulement d'oxygène (203b) et un second dudit épurateur (105a) en raccordement fluidique avec ledit second refoulement d'hydrogène (203a), fournissant ainsi deux circuits pour épurer séparément ledit oxygène et ledit hydrogène, dans lequel lesdits circuits d'épuration séparés se rejoignent avant d'entrer à nouveau dans ladite cellule électrolytique (202).

12. Procédé d'épuration d'oxygène ou d'hydrogène gazeux produit dans une cellule de dissociation électrolytique (201, 202) d'un générateur électrolytique (101, 102), comprenant les étapes de : détente d'un fluide diphasique comprenant un gaz à épurer dans un réservoir de collecte (107) afin de séparer ledit gaz à épurer ; lavage dudit gaz dans une pluralité de cuves de lavage (108) arrosées d'un liquide de lavage, acheminant ainsi l'écoulement dudit gaz à épurer à travers ladite pluralité de cuves de lavage (108) ; refroidissement dudit gaz afin de condenser son contenu en humidité au moyen d'un recondenseur (111) comprenant au moins un échangeur de chaleur dans lequel circule un fluide réfrigérant.

13. Procédé d'épuration de gaz selon la revendication 12, comprenant en outre l'étape de récupération dudit liquide de lavage et de tout électrolyte auparavant entraîné par ledit oxygène ou ledit hydrogène gazeux, et de leur réintroduction (116, 117, 118) dans ladite cellule électrolytique (102, 202).

14. Procédé d'épuration de gaz selon l'une quelconque des revendications 12 ou 13, dans lequel ledit générateur électrolytique (101, 102) est un générateur électrolytique selon l'une quelconque des revendications 8 à 11.
